# EUROPEAN PATENT APPLICATION

(11) **EP 2 804 078 A1**
(43) Date of publication of application: **19.11.2014**
(21) Application number: 13735817.2
(22) Date of filing: 09.01.2013
(51) Int. Cl.: G06F 3/033

(54) **TOUCH STAMP FOR PORTABLE TERMINAL EMPLOYING TOUCH SCREEN AND AUTHENTICATION SYSTEM AND METHOD USING SAME**

(30) Priority: 09.01.2012 KR 20120002607
(71) Applicant: Choi, Youngwoo, Gyeonggi-do 448-531 (KR)
(72) Inventor: Choi, Youngwoo, Gyeonggi-do 448-531 (KR)
(74) Representative: Gulde & Partner
(86) International application number: PCT/KR2013/000185
(87) International publication number: WO 2013/105788

(57) **Abstract**

The present invention relates to a method for performing an authentication using a touch stamp which can perform a touch input operation for inputting a pattern that may not be easily directly inputted by a human to a portable terminal which supports multiple touches. The touch stamp of the present invention comprises: a body having one flat end in which one or more through holes are formed; and one or more touch protrusions accommodated in the body and selectively protruding outwardly from said one end of the body through the through holes according to a touch pattern having at least one of a preset time pattern and a preset location pattern. The present invention has advantages of enabling a touch input operation for inputting a fine pattern on a touch screen of a portable terminal.

## Description

### [Technical Field]

The present invention relates to a touch stamp for a portable terminal, and an authentication system and a method using the same, and more particularly, to a method for performing authentication using a touch stamp capable of performing a touch input of a pattern that is difficult for a user to directly input on a portable terminal that supports multi-touch.

### [Background Art]

In recent years, various portable terminals such as a smart phone and a table PC are widely used. In order to increase portability, the portable terminals are mostly designed to be miniaturized, light-weighted, and simplified. As mentioned above, in the portable terminal designed to be miniaturized, light-weighted, and simplified, in order to minimize a hardware configuration exposed at a front surface of the terminal and maximize a display, a touchscreen is often provided by employing a touch panel on a front surface of the display, as an input means. In the portable terminal having such a touchscreen, since a hardware input means such as a button for inputting a user input is minimized, the portable terminal employing the touchscreen is recently generalized.

Meanwhile, in the touchscreen portable terminal, in order to optimize an image output and a user input by using a small display, the latest trend is to employ a touch panel capable of recognizing multi-touch. Here, the multi-touch technology is a technology that simultaneously recognizes several touch points, and allows various manipulations to be performed more than those in a technology that recognizes only one touch point.

However, application technologies using the multi-touch technology of the portable terminal employing the touchscreen are not sufficiently utilized. Particularly, the multi-touch technology is generally used as a limited technology for enlarging or reducing a screen. The reason why the multi-touch technology is widely utilized is because there is a limitation on precision of a touch pattern to be input with the hand and patterns input with the hand are difficult to be identical time after time and are arbitrary.

### [Disclosure]

### [Technical Problem]

In order to solve the problems, an object of the present invention is to provide a touch stamp as a touch input means capable of expanding usability of a multi-touch technology on a touchscreen of a portable terminal.

Another object of the present invention is to provide a touch stamp capable of performing a touch input of a precise pattern on the touchscreen of the portable terminal according to a predetermined setting.

Still another object of the present invention is to provide a touch stamp capable of continually performing touch inputs of the same pattern.

Still another object of the present invention is to provide a touch stamp capable of utilizing various application functions on the portable terminal by performing a touch input of a complicated pattern.

Still another object of the present invention is to provide a touch stamp capable of utilizing a touch input of a precise touch pattern that is difficult to input with the hand for various authentication processes performed on the portable terminal by performing the touch input of the precise touch pattern.

### [Technical Solution]

An exemplary embodiment of the present invention provides a touch stamp including a body that is flat, and has one end surface on which one or more vent holes are formed; and one or more touch protrusions that are accommodated within the body, and selectively protrude from the one end surface toward the outside of the body through the vent holes according to a touch pattern having at least one of a predetermined time pattern and a predetermined position pattern.

Further, the touch stamp may further include a driving means for controlling the at least one or more touch protrusions to selectively protrude toward the outside of the body.

Furthermore, the touch stamp may include one touch protrusion, and the driving means may control the one touch protrusion to selectively protrude according to a predetermined time pattern.

Moreover, the touch stamp may include two or more touch protrusions that are arranged at different positions from each other, and the driving means may control the two or more touch protrusions to selectively protrude at the same time.

At this time, the touch stamp may include two or more touch protrusions that are arranged at different positions from each other, and the driving means may control the two or more touch protrusions to selectively protrude according to different time patterns from each other.

Meanwhile, another exemplary embodiment of the present invention provides a touch stamp including a body that is flat, and has one end surface on which one or more vent holes are formed; one or more touch terminals that are exposed to the outside of the body through the vent holes from the one end surface according to a touch pattern having at least one of a predetermined time pattern and a predetermined position pattern, and have electric conductivity; and a connecting part that is accommodated within the body and whose one end is connected to the at least one or more touch terminals to form an electric charge moving path.

At this time, the touch stamp may further include a contact part that is connected to the other end of the connecting part, and form an electric charge moving path by cooperating with a human body when the contact part is exposed to the outside of the body to touch the human body.

Further, the touch stamp may include one touch terminal, and the touch stamp may further include a switching part that selectively opens or closes the electric charge moving path formed by the connecting part according to the predetermined time pattern.

Furthermore, the touch stamp may include two or more touch terminals that are arranged at different positions from each other, and the connecting part may form electric charge moving paths that are different from each other for the two or more touch terminals. The touch stamp may further include a switching part that selectively opens or closes the two or more electric charge moving paths formed by the connecting part according to different time patterns from each other.

### [Effect of the Invention]

In accordance with the touch stamp according to the embodiments of the present invention, the following effects are obtained.

That is, it is possible to implement various application technologies on the portable terminal by expanding usability of a multi-touch technology on the touchscreen of the portable terminal.

Further, in accordance with the touch stamp according to the embodiments of the present invention, it is possible to apply the touch input of the precise pattern to the touchscreen of the portable terminal.

Furthermore, in accordance with the touch stamp according to the embodiments of the present invention, it is possible to continually and repeatedly perform touch inputs of the same pattern.

Moreover, in accordance with the touch stamp according to the embodiments of the present invention, it is possible to utilize various application functions on the portable terminal by performing a touch input of a complicated pattern.

In addition, in accordance with the touch stamp according to the embodiments of the present invention, it is possible to utilize the touch input of the precise touch pattern for various authentication processes performed on the portable terminal by performing the touch input of the precise touch pattern that is difficult to input with the hand.

### [Description of Drawings]

FIG. 1 is a perspective view illustrating a configuration of a touch stamp according to a first embodiment of the present invention.
FIGS. 2 and 3 are function block diagrams illustrating configurations according to functions of the touch stamp according to the first embodiment of the present invention.
FIGS. 4 and 5 are perspective views illustrating a configuration of a touch stamp according to a second embodiment of the present invention.
FIGS. 6 and 7 are function block diagrams illustrating configurations according to functions of the touch stamp according to the second embodiment of the present invention.
FIGS. 8 to 10 are exemplary diagrams illustrating operation methods and shapes of touch protrusions and touch terminals of the touch stamps according to the first and second embodiments of the present invention.
FIG. 11 is a network configuration diagram illustrating a configuration of an authentication system using the touch stamp according to the embodiment of the present invention.
FIG. 12 is a flowchart illustrating steps of the authenticating method using the touch stamp according to the embodiment of the present invention.

### [Best Mode]

Merits and characteristics of the present invention, and methods for accomplishing them will become more apparent from the following embodiments taken in conjunction with the accompanying drawings. However, the present invention is not limited to the disclosed embodiments, but may be implemented in various manners. The embodiments are provided to complete the disclosure of the present invention and to allow those having ordinary skill in the art to understand the scope of the present invention. The present invention is defined by the category of the claims.

The same reference numerals will be used throughout the specification to refer to the same or like parts.

Hereinafter, a touch stamp according to the present invention will be described in detail with reference to the accompanying drawings.

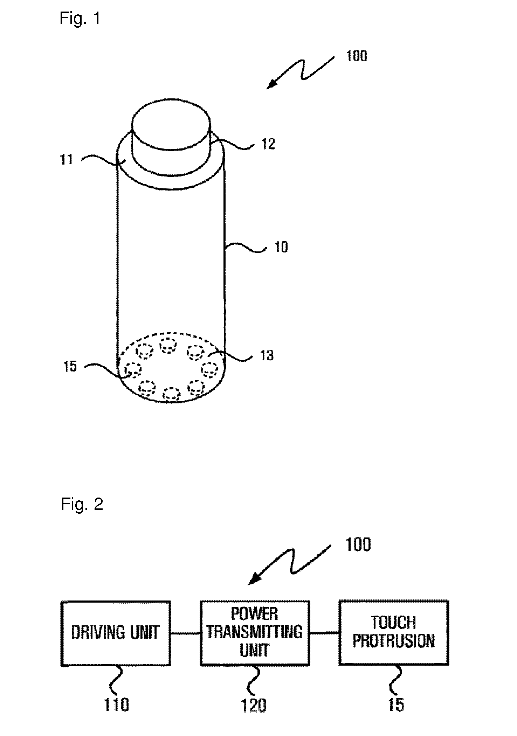

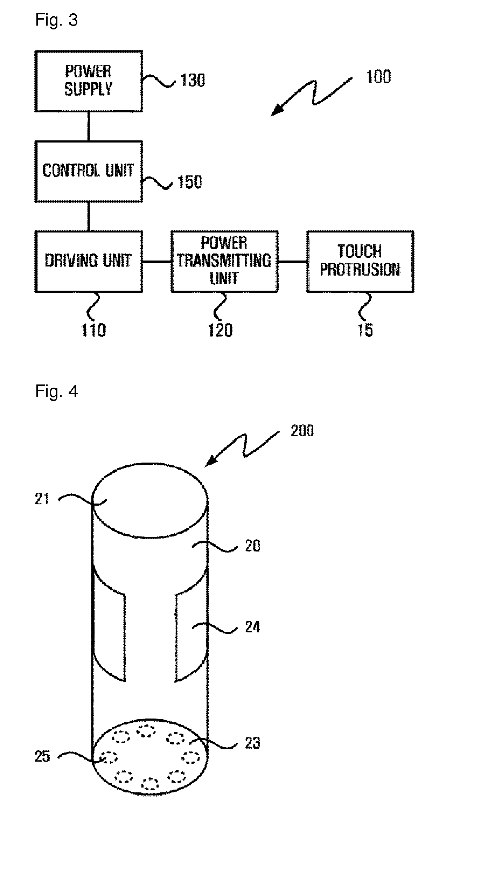

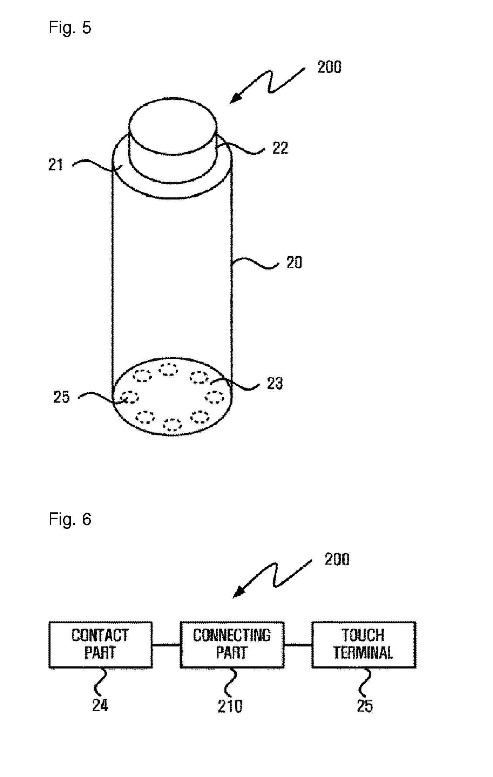

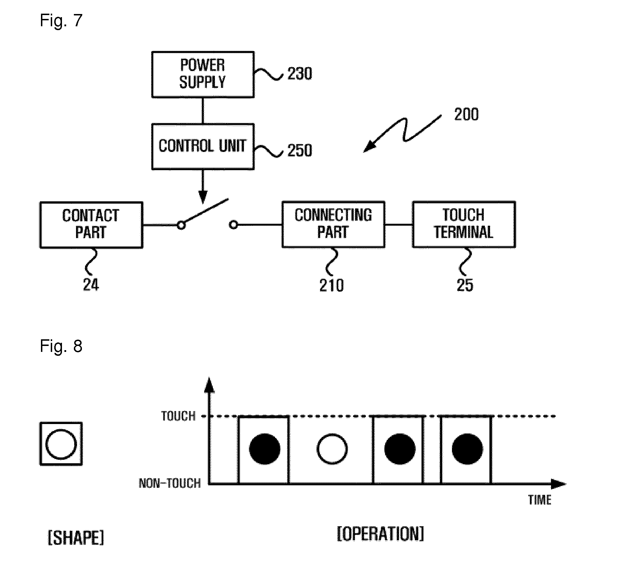

FIG. 1 is a perspective view illustrating a configuration of a touch stamp according to a first embodiment of the present invention, FIGS. 2 and 3 are function block diagrams illustrating configurations according to functions of the touch stamp according to the first embodiment of the present invention, FIGS. 4 and 5 are perspective views illustrating a configuration of a touch stamp according to a second embodiment of the present invention, and FIGS. 6 and 7 are function block diagrams illustrating configurations according to functions of the touch stamp according to the second embodiment of the present invention. Further, FIGS. 8 to 10 are exemplary diagrams illustrating operation methods and shapes of touch protrusions and touch terminals of the touch stamps according to the first and second embodiments of the present invention.

Before the description with reference to the drawings, in the embodiments of the present invention, the 'touch stamp' means a device configured to allow a touch input of a predetermined regular pattern to be applied to a touchscreen of a portable terminal employing the touchscreen.

In the following description, the predetermined regular pattern applied to the touchscreen by the touch stamp is expressed as a 'touch pattern,' and the touch pattern includes a time pattern of the touch input and/or a position pattern of the touch input applied by the touch stamp.

The touch stamp when the touch input of the touchscreen of the portable terminal is detected in a pressure manner and the touch stamp when the touch input of the touchscreen of the portable terminal is detected in a contact manner have different configurations from each other. In the following description, the touch stamp for the portable terminal employing the pressure-type touchscreen is described in the first embodiment, and the touch stamp for the portable terminal employing the contact-type touchscreen is described in the second embodiment.

The touch stamp according to the first embodiment of the present invention will be first described with reference to FIGS. 1, 2 and 3.

As illustrated in FIG. 1, a touch stamp 100 according to the first embodiment of the present invention includes a body 10 that forms the entire shape of the touch stamp 100 and includes an internal configuration thereof.

Furthermore, a driving button 12 is provided on one end surface 11 of the body 10. The driving button 12 may be provided to reciprocate a certain section in a direction perpendicular to the one end surface 11. For example, when the driving button 12 is moved toward the body 10 by external force, the touch stamp 100 allows the touch input to be applied to the touchscreen of the portable terminal according to a predetermined touch pattern. When the external force applied to the driving button 12 is removed to return the driving button 12 in a direction opposite to the body 10, the touch stamp allows the touch input applied to the touchscreen to be stopped. That is, the driving button 12 is a means for allowing the touch input to be selectively applied to the portable terminal, and is manipulated by a user. Naturally, a position of the driving button 12 is not limited to a position illustrated in the drawing, but the driving button may be positioned at any position on one side of the body 10.

Meanwhile, the other end surface 13 which is a plane surface is formed at the other end of the one end surface 11. When the touch input is performed on the touchscreen of the portable terminal by the touch stamp 100, the other end surface 13 is a part that comes in close contact with the touchscreen by the user.

One or more touch protrusions 15 are formed at the other end surface 13 so as to be selectively exposed to the outside through vent holes formed on the other end surface 13. One or more touch protrusions 15 may be formed depending on the kind of the touch pattern which is previously determined for the touch stamp 100.

Meanwhile, the touch stamp 100 may be divided into two or more embodiments, and an embodiment where the touch stamp is provided with a power supply and an embodiment where the touch stamp is not provided with the power supply are respectively described. When the configuration of the touch stamp 100 is described depending on functional elements with reference to FIGS. 2 and 3, a driving unit 110 is provided. The driving unit 110 is a means for receiving external force or a driving power from a power supply 130 provided within the touch stamp 100 to operate the touch protrusion 15 to be described below. For example, when the power supply is not provided within the touch stamp 100 as illustrated in FIG. 2, a means such as the touch button 12 of FIG. 1 which receives the external force to be moved may correspond to the driving unit 110. Moreover, when the power supply 130 is provided within the touch stamp 100 as illustrated in FIG. 3, the driving unit 110 may be provided as a means such as an electric motor that converts electric energy into mechanical energy. At this time, the power supply 130 may be a battery or a means for receiving an external power.

In addition, a power is transmitted to the touch protrusion 15 by driving of the driving unit 110, and a power transmitting unit 120 may be further included between the driving unit 110 and the touch protrusion 15. When a separate driving power source is not provided within the touch stamp 100, the power transmitting unit 120 may serve to transmit force generated by movement of the driving unit 110 by the external force applied to the driving unit 110 to the touch protrusion 15. For example, in the embodiment illustrated in FIG. 1, the power transmitting unit 120 has a rod shape in which the power transmitting unit extends in parallel with a longitudinal direction of the body 10 within the body 10 of the touch stamp 100. When the touch button 12 is moved toward the body 10, one end of the power transmitting unit 120 is pushed in a direction of the touch protrusion 15 by the touch button 12, so that the touch protrusion 15 can be exposed to the outside through the vent holes formed on the other end surface 13. In such a case, when the external force applied to the touch button 12 is removed, the touch button 12 and the rod-shaped power transmitting unit 120 are returned to their original positions, so that the touch protrusion 15 can be accommodated within the body 10 again.

Meanwhile, when the power supply 130 is provided and the driving unit 110 is an electric motor that is operated by the power as illustrated in FIG. 3, the power transmitting unit 120 may convert a rotational motion into a straight-line motion to transmit the converted straight-line motion to the touch protrusions 15. For example, the power transmitting unit 120 may include a means such as a connecting rod or a combination of a rack gear and a pinion gear that generally converts a rotational motion into a horizontal motion.

At this time, especially for the touch stamp 100 that is operated by an internal power as illustrated in FIG. 3, one or a plurality of touch protrusions 15 may be exposed to the outside according to a predetermined schedule to form a regular touch pattern with time. For example, the time pattern (like a Morse code) may be formed by controlling a time at which one touch protrusion 15 is exposed to the outside and a time at which the touch protrusion is accommodated inside again. To achieve this, a control unit 150 that selectively controls the driving unit 110 may be provided, and the control unit 150 includes an inverter to determine a driving speed and a driving direction of the driving unit 110 and whether to drive the driving unit. Further, in the touch stamp 100 illustrated in FIG. 1, when a signal is received through the touch button 12, the control unit 150 may drive the touch protrusion 15 according to the predetermined touch pattern, and stop the touch protrusion when the driving of the touch protrusion according to the touch pattern is finished.

Here, the plurality of touch protrusions 15 may be provided, and in this case, a plurality of driving units 110 or a plurality of power transmitting units 120 may be separately provided in order to independently control the touch protrusions 15, or the touch protrusions 15 driven in the driving direction of the driving unit 110 may respond one another.

Meanwhile, when the touch stamp according to the second embodiment of the present invention is described with reference to FIGS. 4 and 5, a touch stamp 200 according to the second embodiment may be divided into two embodiments as illustrated in the drawings.

Firstly, when a case where the power supply is not provided within the touch stamp 200 is described, the touch stamp 200 includes a body 20. The body 20 forms the entire shape of the touch stamp 200, and surrounds an internal configuration thereof.

Furthermore, a contact part 24 is provided on one side of the body 20. The contact part 24 is made of a conductive material, and forms a path through which touch terminals 25 to be described below and electric charges can be moved. That is, the contact part is a switching means for allowing the touch input to be applied to the portable terminal when a human body selectively touches the contact part 24, and is a part which selectively connects the touch terminals 25 with an external conductive configuration (a human body) connected to a ground and is manipulated by the user. Naturally, a position of the contact part 24 is not limited to a position illustrated in the drawing, but the contact part may be positioned at any position on one side of the body 20. Here, the conductive material means a material having electrical conductivity by including metal, a liquid or a solid electrolyte.

Meanwhile, the other end surface 23 which is a plane surface is formed at the other end of the one end surface 21. When the touch input is applied to the touchscreen of the portable terminal by the touch stamp 200, the other end surface 23 is a part that comes in close contact with the touchscreen by the user.

One or more touch terminals 25 are formed on the other end surface 23 so as to be exposed to the outside by penetrating the other end surface 23. The touch terminal 25 may be formed in parallel with the other end surface 23 or may be exposed to the outside at a predetermined height. One or more touch terminals 25 may be provided depending on the kind of the touch pattern which is previously determined for the touch stamp 200. At this time, the touch terminal 25 is made of a conductive material.

Accordingly, when the touch terminal 25 comes in close contact with the contact-type touch panel such as a capacitive touch panel and hand touches the contact part 24, a moving path of the electric charges is formed, and the electric charges are moved. Thus, it is possible to detect the touch pattern of the touch terminals 25 for the touch panel of the portable terminal.

When functional elements of the touch stamp 200 are described, a connecting part 210 is provided as illustrated in FIG. 6. The connecting part 210 is a part that connects the touch terminal 25 with the contact part 24, and is also made of a conductive material.

Meanwhile, in the second embodiment of the present invention, a power supply may be provided within the touch stamp 200 as illustrated in FIG. 5.

Moreover, a driving button 22 is provided on one end surface 21 of the body 20. The driving button 22 may be provided so as to reciprocate a certain section in a direction perpendicular to the one end surface 21. For example, when the driving button 22 is moved toward the body 20 by external force, the touch stamp 200 can allow the touch input to be applied on the touchscreen of the portable terminal according to a predetermined touch pattern. That is, the driving button 22 is a switching means for allowing the touch input to be selectively applied to the portable terminal, and is manipulated by the user. Naturally, a position of the driving button 22 is not limited to a positon illustrated in the drawing, but the driving button may be positioned at any position on one side of the body 20.

Meanwhile, the other end surface 23 which is a plane surface is formed at the other end of the one end surface 21. When the touch input is applied to the touchscreen of the portable terminal by the touch stamp 200, the other end surface 23 is a part that comes in close contact with the touchscreen by the user.

One or more touch terminals 25 are provided at the other end surface 23 so as to be exposed to the outside by penetrating the other end surface 23. The touch terminal 25 may be provided in parallel with the other end surface 23 or may be exposed to the outside at a predetermined height. One or more touch terminals 25 may be provided depending on the kind of the touch pattern which is previously determined for the touch stamp 200. At this time, the touch terminal 25 is made of a conductive material.

In addition, as mentioned in the preceding description, the contact part 24 that selectively connects the touch terminal 25 with an external conductive configuration (for example, a human body) connected to a ground may be provided on one side of the touch stamp 200.

When the configuration of the touch stamp 200 is described according to functional elements, a switching element is provided at the connecting part 210 as illustrated in FIG. 7. Further, the switching element switches connection between the connecting part 210 and the contact part 24.

Furthermore, a control unit 250 that controls the connecting part 210 is provided. The control unit 250 receives a power from the power supply 230 to open or close the switching element according to a predetermined setting. Accordingly, the control unit selectively connects or blocks a connecting path between the contact part 24 and the touch terminal 25.

Meanwhile, when the driving button 22 is driven, a command to control the switching element according to the predetermined pattern is sent to the control unit 250.

Moreover, in the above-described embodiment, instead of the contact part 24, an element having electric capacity (for example, a capacitor) may be connected to a ground (not illustrated) on a left side of the drawing with the switching element included in the connecting part 210 as its center.

When the touch pattern by the touch stamp 100 or 200 according to the embodiment of the present invention described above is described with reference to FIGS. 8 to 10, only one touch protrusion 15 or one touch terminal 25 is provided, and a pattern is formed by allowing the touch protrusion 15 or the touch terminal 25 to be operated in a touch or non-touch manner within a plurality of predetermined unit times. That is, in the touch stamp 100 illustrated in FIG. 3 or the touch stamp 200 illustrated in FIG. 7, the touch protrusion 15 and the touch terminal 25 are operated in a predetermined time pattern. In this way, when the touch protrusion and the touch terminal are operated on the portable terminal provided with the touchscreen, the portable terminal can recognize the time pattern.

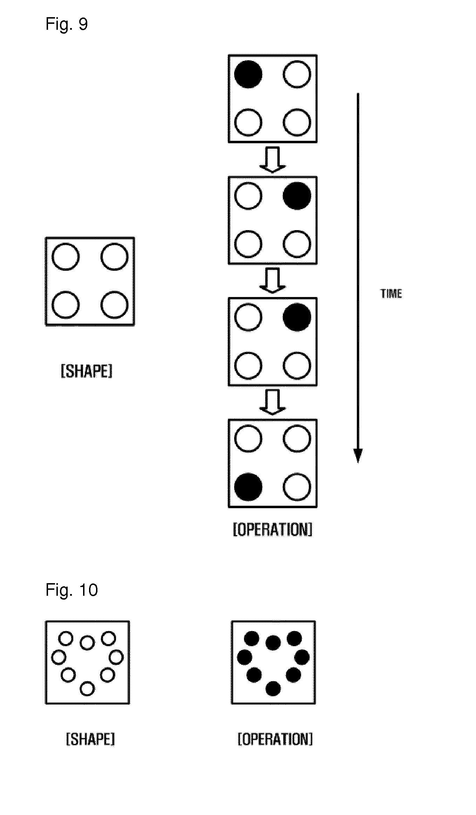

Meanwhile, when at least two or more touch protrusions 15 or touch terminals 25 are provided as illustrated in FIG. 9, the touch protrusions 15 or the touch terminals 25 are individually operated, so that the touch protrusions 15 or the touch terminals 25 positioned at different positions from each other may apply the touch inputs to the touchscreen of the portable terminal as time elapses.

In addition, as illustrated in FIG. 10, the touch stamp 100 according to the embodiment of the present invention includes the plurality of touch protrusions 15 or touch terminals 25, and the plurality of touch protrusions 15 or touch terminals 25 may be arranged in the regular pattern to simultaneously apply the touch inputs on the touchscreen.

When the touch stamp 100 is used, it is possible to perform various authentication processes by applying the touch inputs on the touchscreen of the portable terminal in the predetermined pattern. For example, it is possible to simply perform a function of unlocking the portable terminal, and it is possible to use the touch stamp 100 as a method of authenticating a main agent that issues a coupon or a stamp card in implementing the coupon or the stamp card issued offline through the portable terminal online.

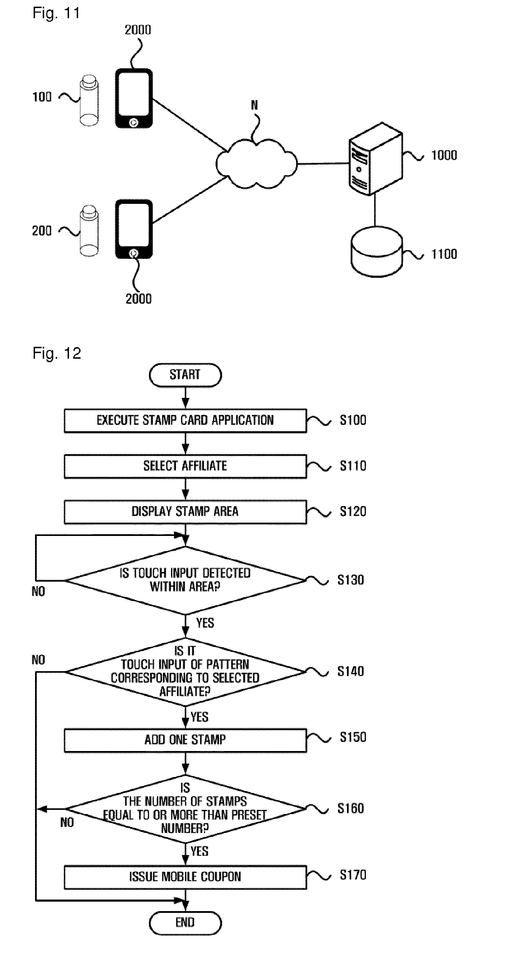

One embodiment of the authenticating method using the touch stamp 100 will be described with reference to FIGS. 11 and 12. FIG. 11 is a network configuration diagram illustrating a configuration of an authentication system using the touch stamp according to the embodiment of the present invention, and FIG. 12 is a flowchart illustrating steps of the authenticating method using the touch stamp according to the embodiment of the present invention.

As illustrated in FIG. 11, the authentication system according to the embodiment of the present invention includes a plurality of portable terminals 2000, and an authentication server 1000 that communicates with the portable terminals via a network N. The portable terminal 2000 may be a mobile communication terminal provided with a touchscreen.

Further, the authentication server 1000 includes a database 1100 that stores touch pattern information of the touch stamps 100 and 200 and affiliate information of affiliated companies corresponding to the touch stamps 100 and 200. At this time, the touch pattern information may include unique pattern information differently set for each of the affiliated companies or affiliates.

Accordingly, when the portable terminal 2000 recognizes the regular touch pattern by the touch stamp 100 or 200, the authentication server 1000 receives the recognized touch pattern information from the portable terminal 2000. Furthermore, the authentication server compares the received touch pattern information with a plurality pieces of information stored in the database 1100 to search matched touch pattern information. When the matched touch pattern information is searched, the authentication server checks the affiliate information of the affiliated company corresponding to the matched touch pattern information, authenticates that an input of the touch pattern for the portable terminal 2000 is performed in the corresponding affiliate, and sends the affiliate information and an authentication success signal to the portable terminal 2000.

Accordingly, the portable terminal 2000 performs a predetermined operation in response to the affiliate information and authentication success signal received from the authentication server 1000.

As one embodiment of an authenticating process by the authentication system, when a method for providing an online stamp card service is described with reference to FIG. 12, the portable terminal 2000 performs step S1000 of executing a stamp card application.

The stamp card application is an application for a terminal linked with the authentication server 1000, and may be, for example, an application that supplies a coupon to be exchanged with goods or a service when the predetermined touch pattern for a predetermined affiliate is received a predetermined number of times.

Moreover, when the stamp card application is executed, a step of providing a list of the plurality of affiliates that previously contacts with an operation main agent of the authentication server 1000 to the portable terminal 2000 is performed. For example, a list of coffee chains or restaurants may be provided. Accordingly, the portable terminal 2000 receives information on one affiliate selected from the list by the user (S110).

Further, the portable terminal 2000 displays a stamp card screen corresponding to the selected affiliate. For example, a stamp card for a coffee chain of 'Coffee Bean' may be displayed on the touchscreen, and the number of the already issued stamps and the number of stamps to be issued in future in order to receive the coupons may be displayed.

Further, in order to receive the touch input using the touch stamp 100 or 200, step S120 of displaying a stamp area on the touchscreen of the portable terminal 2000 is performed. At this time, the stamp area may be an area of a plurality of divided areas of the stamp card where the stamp is not issued, or may be a separate area.

Accordingly, the touch input from the touch stamp 100 or 200 may be applied to the stamp area displayed on the touchscreen. Furthermore, when the portable terminal 2000 detects the touch input within the stamp area (S130), the portable terminal compares the touch pattern of the detected touch input with the touch pattern previously stored so as to correspond to the affiliate selected in step S110, and determines whether or not the touch pattern of the detected touch input is identical to the previously stored touch pattern (S140). Here, the portable terminal 2000 may previously store the touch patterns corresponding to the affiliates, and may compare the received touch pattern with the previously stored touch patterns. Alternatively, the portable terminal 2000 may send information of the received touch pattern to the authentication server 1000, and the authentication server 1000 may compare information of the received touch pattern with the touch pattern stored in the database 1100 to perform authentication.

Furthermore, when the received touch pattern is identical to the previously stored touch pattern, the authentication server adds one stamp to the stamp card, and displays the stamp card (S150). The authentication server 1000 determines whether or not the number of added stamps reaches a predetermined number (S160), and perform step S170 of issuing an electronic coupon to the portable terminal 2000 when it is checked that the stamps are accumulated up to the predetermined number.

That is, the affiliate installs the touch stamp 100 or 200 having unique touch pattern, and the user performs the touch input from the touch stamp 100 or 200 through the touchscreen of the portable terminal 2000. The authentication server checks whether or not the received touch pattern corresponds to the touch pattern which is previously stored for the affiliate to authenticate whether or not the affiliate actually inputs the touch input.

Accordingly, it is possible to implement an authenticating method using a general stamp online by receiving a touch input having a touch pattern that is difficult to input with the hand from the touch stamp 100 or 200.

It is appreciated to those skilled in the art that various exemplary logic blocks and algorism steps which are described in connection with the embodiments disclosed herein may be implemented by electronic hardware, computer software, or a combination of the electronic hardware and computer software. In order to clearly describe replaceability of the hardware and software, various exemplary steps have been primarily described in detail in view of their functions. Whether to implement functions by the hardware or the software depends on a specific application and design limitation conditions assigned to the entire system.

Those skilled in the art can implement the aforementioned functions for the specific application in various manners, but it should be interpreted that such implementations would fall within the scope of the present invention.

The embodiments are merely examples for describing the present invention in detail, but the present invention is not limited to the embodiments. The embodiments can be added, omitted, substituted or changed without departing from the gist of the present invention. The present invention is not limited to the aforementioned description, and is limited to only the appended claims.

## Claims

1. A touch stamp comprising:
a body that is flat, and has one end surface on which one or more vent holes are formed; and
one or more touch protrusions that are accommodated within the body, and selectively protrude from the one end surface toward the outside of the body through the vent holes according to a touch pattern having at least one of a predetermined time pattern and a predetermined position pattern.

2. The touch stamp of claim 1, further comprising:
a driving means for controlling the at least one or more touch protrusions to selectively protrude toward the outside of the body.

3. The touch stamp of claim 2, wherein the touch stamp includes one touch protrusion, and the driving means controls the one touch protrusion to selectively protrude according to a predetermined time pattern.

4. The touch stamp of claim 2, wherein the touch stamp includes two or more touch protrusions that are arranged at different positions from each other, and the driving means controls the two or more touch protrusions to selectively protrude at the same time.

5. The touch stamp of claim 2, wherein the touch stamp includes two or more touch protrusions that are arranged at different positions from each other, and the driving means controls the two or more touch protrusions to selectively protrude according to different time patterns from each other.

6. A touch stamp comprising:
a body that is flat, and has one end surface on which one or more vent holes are formed;
one or more touch terminals that are exposed to the outside of the body through the vent holes from the one end surface according to a touch pattern having at least one of a predetermined time pattern and a predetermined position pattern, and have electric conductivity; and
a connecting part that is accommodated within the body and whose one end is connected to the at least one or more touch terminals to form an electric charge moving path.

7. The touch stamp of claim 6, further comprising:
a contact part that is connected to the other end of the connecting part, and forms an electric charge moving path by cooperating with a human body when the contact part is exposed to the outside of the body to touch the human body.

8. The touch stamp of claim 6 or 7,
wherein the touch stamp includes one touch terminal, and
the touch stamp further includes:
a switching part that selectively opens or closes the electric charge moving path formed by the connecting part according to the predetermined time pattern.

9. The touch stamp of claim 6 or 7,
wherein the touch stamp includes two or more touch terminals that are arranged at different positions from each other,
the connecting part forms electric charge moving paths that are different from each other for the two or more touch terminals, and
the touch stamp further includes:
a switching part that selectively opens or closes the two or more electric charge moving paths formed by the connecting part according to different time patterns from each other.
